# EUROPÄISCHE PATENTANMELDUNG

(11) **EP 0 658 033 A2**
(43) Veröffentlichungstag der Anmeldung: **14.06.1995**
(21) Anmeldenummer: 94116609.2
(22) Anmeldetag: 21.10.1994
(51) Int. Cl.: H04M 3/42, H04M 9/00

(54) **Fernsprech-Nebenstellenanlage**

(30) Priorität: 02.12.1993 DE 4341025
(71) Anmelder: DEUTSCHE BUNDESPOST TELEKOM, D-53105 Bonn (DE)
(72) Erfinder: Dihlmann, Klaus Dieter, D-64839 Altheim (DE); Achenbach, Michael, D-35216 Biedenkopf 3 (DE)

(57) **Zusammenfassung**

Es wird eine Fernsprech-Nebenstellenanlage mit einer Zentraleinheit und mehreren Fernsprechapparaten, von denen mindestens einer eine programmierbare Steuereinheit und eine Lauthör-/Freisprech-Einrichtung aufweist, angegeben. Um die Möglichkeit zu schaffen, daß an einem programmierbaren Fernsprechapparat alle ankommenden Anrufe als Direktanrufe behandelt werden, steuert die Steuereinheit nach Eingabe bestimmter Kodierungen die Lauthör-/Freisprech-Einrichtung des eigenen Fernsprechapparates bei ankommenden Anrufen in vorgegebener Weise.

## Beschreibung

Die Erfindung betrifft eine Fernsprech-Nebenstellenanlage mit einer Zentraleinheit und mit mehreren Fernsprechapparaten, von denen mindestens einer eine programmierbare Steuereinheit und eine Lauthör-/Freisprech-Einrichtung aufweist.

Solche Nebenstellenanlagen sind bereits bekannt und verfügen über ein breites Spektrum zusätzlicher Leistungsmerkmale, die neben einem erhöhten Nutzwert die Bedienung für den Anwender komfortabler machen sollen.

Ein bekanntes Leistungsmerkmal ist der sogenannte Direktanruf, bei dem der anrufende Teilnehmer durch die Eingabe einer bestimmten Kodierung an seinem Fernsprechapparat bewirken kann, daß bei dem angerufenen Teilnehmer der Anruf nicht signalisiert wird, sondern daß eine im Apparat des angerufenen Teilnehmers vorhandene Lauthör-/Freisprech-Einrichtung direkt eingeschaltet wird, so daß eine Verbindung ohne zutun des Angerufenen hergestellt wird. Dieses Leistungsmerkmal kann jedoch nur vom anrufenden Teilnehmer aktiviert werden und ist nur für das jeweilige Gespräch eingeschaltet. Für weitere Direktanrufe muß die entsprechende Kodierung jedesmal neu eingegeben werden.

Aufgabe der Erfindung ist es daher, die bekannte Fernsprech-Nebenstellenanlage derart weiterzubilden, daß die Steuerung der Anrufe als Direktanrufe durch den angerufenen Teilnehmer an dessen Apparat beeinflußt werden kann.

Diese Aufgabe wird bei einer Nebenstellenanlage der eingangs genannten Art dadurch gelöst, daß die Steuereinheit nach Eingabe bestimmter Kodierungen die Lauthör-/Freisprech-Einrichtung des eigenen Fernsprechapparates bei ankommenden Anrufen in vorgegebener Weise steuert.

Der Vorteil der erfindungsgemäßen Nebenstellenanlage liegt insbesondere darin, daß die Steuerung der Lauthör-/Freisprech-Einrichtung des eigenen Fernsprechapparates zur Durchschaltung eines Anrufers als Direktanruf nicht mehr von den Vorgaben des anrufenden Teilnehmers abhängig ist, sondern an jedem programmierbaren Fernsprechapparat mit Lauthör-/Freisprech-Einrichtung für alle ankommenden Anrufe festlegbar ist. Dadurch ist der Nutzungskomfort der Anlage erhöht, der Benutzer kann durch Kodierung seines Apparates entscheiden, ob an diesem Apparat die Anrufe alle direkt über die Lauthöreinrichtung ankommen sollen.

Besonders bevorzugt ist die Nebenstellenanlage so ausgebildet, daß die Steuereinheit nach Eingabe einer ersten Kodierung bei allen ankommenden Anrufen anstelle der üblichen Anrufsignalisierung die Lauthör-/Freisprech-Einrichtung einschaltet. Damit kann der angerufene Teilnehmer entscheiden, ob Anrufe als normale Anrufe signalisiert werden sollen, oder ob sie als Direktanrufe die Lauthör-/Freisprech-Einrichtung aktivieren. Der betreffende Fernsprechapparat läßt sich damit leicht als Freisprech- bzw. Durchsage-Einrichtung nutzen, ohne daß der angerufene Teilnehmer einen ankommenden Anruf annehmen muß.

Eine einfache Abschaltung dieses Leistungsmerkmales, durch welche die Anruf-Signalisierung wieder eingeschaltet wird, ist vorteilhaft durch Eingabe einer zweiten Kodierung möglich und gilt für alle folgenden Anrufe.

Um Rufsignale unterschiedlicher Dauer erzeugen zu können, muß die Zentraleinheit der Nebenstellenanlage eine programmierbare Zentralsteuereinheit enthalten, die besonders bevorzugt so ausgebildet ist, daß sie mindestens teilweise von den Fernsprechapparaten aus programmierbar ist. Abhängig von der Programmierung der Zentralsteuereinheit kann bei dem angerufenen Fernsprechapparat die Rufspannung für eine erste oder für eine zweite vorgegebene Zeitdauer angelegt werden.

Die Programmierung der Zentralsteuereinheit erfolgt besonders vorteilhaft durch die Eingabe einer dritten Kodierung an einem programmierbaren Fernsprechapparat, durch die gleichzeitig die eigene Steuereinheit mit programmiert wird, und durch die Eingabe einer vierten Kodierung an dem rufenden Fernsprechapparat. Durch die so erzeugbaren Rufspannungen unterschiedlicher Dauer ist es nach Eingabe der dritten Kodierung möglich, die Lauthör-/Freisprech-Einrichtung des angerufenen programmierbaren Fernsprechapparates selektiv in Abhängigkeit von der Dauer der anliegenden Rufspannung einzuschalten. Unterschreitet die Dauer der angelegten Rufspannung eine vorgegebene Mindestzeit, dann wird der Anruf signalisiert. Wird die Mindestzeit überschritten, kommt es zu einer direkten Einschaltung der Lauthör-/Freisprech-Einrichtung am angerufenen Fernsprechapparat durch dessen entsprechend programmierte Steuereinheit.

Durch Eingabe einer fünften Kodierung am programmierbaren Fernsprechapparat kann die Zentralsteuereinheit so programmiert werden, daß sie nur noch Rufersignale gleicher Dauer erzeugt.

Um die Lauthör-/Freisprech-Einrichtung wieder abzuschalten, wird nach Ende des Gespräches dem angerufenen Fernsprechapparat und damit der Lauthör-/Freisprech- Einrichtung die Speisung genommen. Diese Funktion kann bevorzugt durch das Auflegen des rufenden Fernsprechapparates ausgelöst werden.

Bei einer weiteren vorteilhaften Ausführungsform der Erfindung ist es möglich, dies durch Eingabe einer sechsten Kodierung von dem angerufenen Fernsprechapparat aus zu bewirken.

Um die Aufmerksamkeit des angerufenen Teilnehmers bei automatischer Einschaltung der Lauthör-/Freisprech-Einrichtung zu erregen und um das Bestehen einer Verbindung zu einem anderen Teilnehmer zu signalisieren, wird besonders bevorzugt um einen vorgegebenen Zeitabschnitt verzögert ein Hörton durch die Lauthör-/Freisprech-Einrichtung abgegeben.

Vorteilhafte Ausgestaltungen der Erfindung sind durch die Merkmale der Unteransprüche gekennzeichnet.

Im folgenden wird ein Ausführungsbeispiel der Erfindung anhand der Zeichnungen näher erläutert. Es zeigen:
- Fig. 1: ein Blockschaltbild eines programmierbaren Fernsprechapparates,
- Fig. 2: ein Blockschaltbild einer erfindungsgemäßen Fernsprech-Nebenstellenanlage.

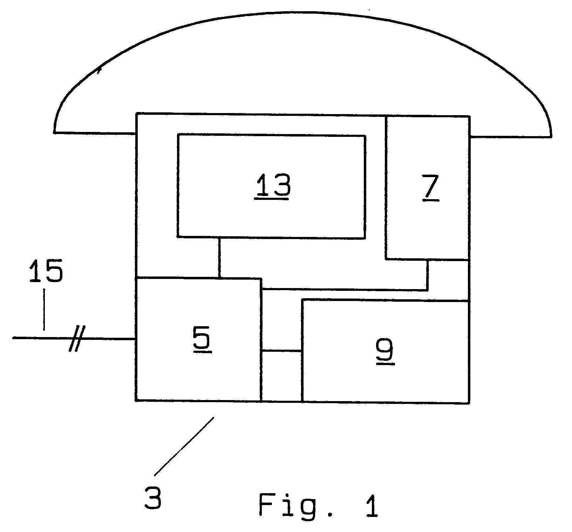

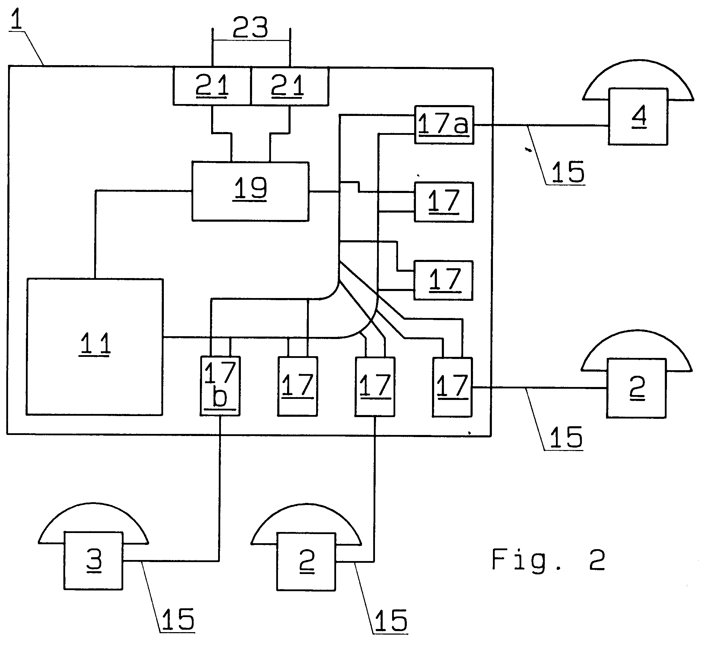

Der in Figur 1 dargestellte Fernsprechapparat 3 ist über eine Zweidraht-Leitung 15 an eine Fernsprech-Nebenstellenanlage 1 (vgl. Figur 2) anschließbar. Diese Zweidraht-Leitung ist in dem Fernsprechapparat 3 an eine Steuereinheit 5 angeschlossen.

Die Steuereinheit 5 ist weiterhin mit einer Lauthör-/Freisprech-Einrichtung 7, einer Anruf-Signalisierung 9 und einem Anzeige- und Bedienfeld 13 des Fernsprechapparates 3 verbunden. Die Steuereinheit 5 verarbeitet die an dem Anzeige- und Bedienfeld eingegebenen Kodierungen, steuert die Anruf-Signalisierung 9, die Lauthör-/Freisprech-Einrichtung 7 und die Anzeigen des Anzeige- und Bedienfeldes 13. Darüber hinaus steuert die Steuereinheit 5 die Verbindung zur Fernsprech-Nebenstellenanlage 1.

Wird über das Anzeige- und Bedienfeld 13 eine erste Kodierung eingegeben, dann wird die Steuereinheit 5 so programmiert, daß sie bei einem ankommenden Anruf anstelle der Anrufsignalisierung 9 die Lauthör-/Freisprech-Einrichtung 7 einschaltet.

Wird eine zweite Kodierung am Anzeige- und Bedienfeld 13 eingegeben, wird die Programmierung der Steuereinheit 5 so verändert, daß anstelle der Lauthör-/Freisprech-Einrichtung 7 die Anruf-Signalisierung 9 wieder eingeschaltet wird, wenn über die Leitung 15 eine Rufspannung angelegt wird.

Die Steuereinheit 5 des Fernsprechapparates 3 ist so ausgebildet, daß die eingestellte Programmierung auch bei abgeschalteter Speisung des Apparates solange erhalten bleibt, bis sie durch die Eingabe einer entsprechenden neuen Kodierung aufgehoben bzw. modifiziert wird, so daß auch nach Abschalten der Speisung durch die Teilnehmer-schaltung 17b der nächste Anruf eines Teilnehmers eine der Programmierung entsprechende Ruferkennung und Auswertung durch die Steuereinrichtung 5 auslöst.

Das in Figur 2 wiedergegebene Blockschaltbild der Fernsprech-Nebenstellenanlage zeigt eine Zentraleinheit 1, an die mehrere Fernsprechapparate 2, 3, 4 angeschlossen sind. In der Zentraleinheit 1 ist für jeden anschließbaren Fernsprechapparat 2, 3, 4 je eine Teilnehmerschaltung 17, 17a, 17b vorgesehen.

Die Teilnehmerschaltungen 17, 17a, 17b sind verbunden mit einer Zentralsteuereinheit 11 und einem Koppelfeld 19. Weiterhin ist das Koppelfeld 19 mit der Zentralsteuereinheit 11 verbunden, so daß die zentralsteuereinheit 11 auf das Koppelfeld und auf die Teilnehmerschaltungen 17 einwirken kann.

Die amtsseitige Verbindung der Nebenstellenanlage erfolgt über Amtsschaltungen 21, an die Amtsleitungen 23 aus dem Fernsprechnetz angeschlossen sind.

Eine interne Verbindung ist vom rufenden Fernsprechapparat 4 über dessen Teilnehmerschaltung 17a und die Zentralsteuereinheit 11 zur Teilnehmerschaltung 17b und von dort schließlich zum gerufenen Fernsprechapparat 3 möglich.

Wird nun am Fernsprechapparat 3 die erste Kodierung eingegeben, dann wird ein Anruf von dem rufenden Fernsprechapparat 4 nicht die übliche Anruf-Signalisierung 9 auslösen, sondern zu einer sofortigen Einschaltung der Lauthör-/Freisprech-Einrichtung 7 (vgl. Figur 1) führen. Nach dem Einschalten der Lauthör-/Freisprech-Einrichtung 7 gibt diese einen Hörton ab, der dem angerufenen Teilnehmer signalisiert, daß die Lauthör-/Freisprech-Einrichtung 7 nun eingeschaltet ist. In dieser durch die erste Kodierung eingestellten Betriebsart ist der Fernsprechapparat 3 für ankommende Amtsanrufe durch eine entsprechende Programmierung der Zentralsteuereinheit 11 gesperrt.

Nach Eingabe der zweiten Kodierung werden ankommende Anrufe wieder über die Anruf-Signalisierung 9 gemeldet und der Fernsprechapparat 3 ist durch die Umprogrammierung der Zentralsteuereinheit 11 für ankommende Amtsanrufe im Rahmen seiner üblichen Amtsberechtigung wieder erreichbar.

Abgehende Amtsgespräche sind unabhängig von der eingegebenen Kodierung auch vom Fernsprechapparat 3 aus über die Teilnehmerschaltung 17b, das Koppelfeld 19, eine freie Amtsschaltung 21 und die entsprechende Amtsleitung 23 nach Maßgabe seiner Amtsberechtigung möglich. Interne Gespräche unterliegen keinen Beschränkungen.

Wird an dem Fernsprechapparat 3 die dritte Kodierung eingegeben, dann wird neben der eigenen Steuereinheit 5 (vgl. auch Figur 1) die Zentralsteuereinheit 11 der Zentraleinheit 1 so programmiert, daß sie abhängig von einer vierten Kodierung, die von dem rufenden Fernsprechapparat 4 eingegeben wird, Rufsignale unterschiedlicher Dauer erzeugen kann.

Die von dem rufenden Apparat 4 einzugebende vierte Kodierung entspricht einer Sondertaste oder einer Auswahlkennziffer, etwa vergleichbar mit dem Betätigen einer Erdtaste oder der Wahl der Auswahlkennziffer Null zur Amtsholung für vollamtsberechtigte Apparate. Nach Eingabe der vierten Kodierung sendet die Zentralsteuereinheit 11 über die Teilnehmerschaltung 17b ein Rufsignal vorgegebener Länge an den angerufenen Fernsprechapparat 3. Die Dauer dieses langen Rufsignals liegt vorzugsweise im Bereich von Sekunden.

Nach Eingabe der dritten Kodierung ist die Steuereinheit 5 des Fernsprechapparates 3 so programmiert, daß sie abhängig von der Dauer der angelegten Rufspannung den Ruf über die Anruf-Signalisierung 9 meldet bzw. die Lauthör-/Freisprech-Einrichtung 7 sofort einschaltet. Dabei liegt die Zeitdauer zur Erkennung eines langen Anrufes, der zur Einschaltung der Lauthör-/Freisprech-Einrichtung 7 führt, im Bereich von z. B. drei Sekunden, so daß durch die Eingabe der vierten Kodierung am rufenden Fernsprechapparat 4 und die dadurch bewirkte Abgabe eines langen Rufsignals an den angerufenen Fernsprechapparat 3 die Lauthör-/Freisprech-Einrichtung 7 direkt eingeschaltet wird.

Wird am rufenden Fernsprechapparat 4 die vierte Kodierung nicht eingegeben, erzeugt die Zentralsteuereinheit 11 der Zentraleinheit 1 ein kurzes Rufsignal, das bei dem gerufenen Fernsprechapparat dazu führt, daß die Steuereinheit 5 die Anruf-Signalisierung 9 aktiviert.

Wird am rufenden Fernsprechapparat 4 die Verbindung beendet, dann wird dem gerufenen Fernsprechapparat 3 mittels der Teilnehmerschaltung 17b die Speisung genommen und damit wird die Lauthör-/Freisprech-Einrichtung 7 abgeschaltet. Die Programmierung der Steuereinheit 5 bleibt jedoch erhalten, so daß eine Unterscheidung der Ruflänge bei einem nächsten Anruf wieder möglich ist.

Da die typische Rufsignaldauer im öffentlichen Fernsprechnetz bei ca. einer Sekunde liegt, wird auch bei einem dem Rufsignal unmittelbar vorausgehenden Erstruf von ca. einer Sekunde Länge eine Rufsignaldauer von zwei Sekunden nicht überschritten, so daß auch nach Eingabe der dritten Kodierung am Fernsprechapparat 3 der Anruf eines externen Teil nehmers am gerufenen Fernsprechapparat 3 stets von der Anruf-Signalisierung gemeldet wird.

Auch nach Eingabe der dritten Kodierung sind abgehende Gespräche intern und extern für den Fernsprechapparat 3 uneingeschränkt möglich.

## Patentansprüche

1. Fernsprech-Nebenstellenanlage mit einer Zentraleinheit und mit mehreren Fernsprechapparaten, von denen mindestens einer eine programmierbare Steuereinheit und eine Lauthör-/Freisprech-Einrichtung aufweist, **dadurch gekennzeichnet**,
daß die Steuereinheit (5) nach Eingabe bestimmter Kodierungen die Lauthör-/Freisprech-Einrichtung (7) des eigenen Fernsprechapparates (3) bei ankommenden Anrufen in vorgegebener Weise steuert.

2. Nebenstellenanlage nach Anspruch 1, dadurch gekennzeichnet, daß die Steuereinheit (5) nach Eingabe einer ersten Kodierung bei allen ankommenden Anrufen anstelle der Anruf-Signalisierung (9) die Lauthör-/Freisprech-Einrichtung (7) einschaltet.

3. Nebenstellenanlage nach Anspruch 2, dadurch gekennzeichnet, daß die Steuereinheit (5) nach Eingabe einer zweiten Kodierung bei allen ankommenden Anrufen anstelle der Lauthör-/Freisprech-Einrichtung (7) die Anruf-Signalisierung (9) einschaltet.

4. Nebenstellenanlage nach Anspruch 1, dadurch gekennzeichnet, daß die Steuereinheit (5) nach Eingabe einer dritten Kodierung und bei einem für eine vorgegebene Mindestzeit anliegenden Rufsignal die Lauthör-/Freisprech-Einrichtung (7) einschaltet.

5. Nebenstellenanlage nach einem der vorstehenden Ansprüche, dadurch gekennzeichnet, daß die Zentraleinheit (1) eine programmierbare Zentralsteuereinheit (11) enthält, die mindestens teilweise von den Fernsprechapparaten (2, 3, 4) aus programmierbar ist.

6. Nebenstellenanlage nach Anspruch 5, dadurch gekennzeichnet, daß die Zentraleinheit (1) abhängig von der Programmierung der Zentralsteuereinheit (11) Rufsignale unterschiedlicher Dauer erzeugt.

7. Nebenstellenanlage nach Anspruch 6, dadurch gekennzeichnet, daß die Programmierung der Zentralsteuereinheit (11) durch die Eingabe der dritten Kodierung an einem programmierbaren Fernsprechapparat (3) und durch die Eingabe einer vierten Kodierung an dem rufenden Fernsprechapparat (4) erfolgt.

8. Nebenstellenanlage nach Anspruch 7, dadurch gekennzeichnet, daß die Zentralsteuereinheit (11) nach Eingabe einer fünften Kodierung von dem programmierbaren Fernsprechapparat (3) aus Rufsignale gleicher Dauer erzeugt.

9. Nebenstellenanlage nach einem der vorstehenden Ansprüche, dadurch gekennzeichnet, daß die Zentralsteuereinheit (11) nach dem Auflegen des rufenden Fernsprechapparates (4) dem angerufenen Fernsprechapparat (3) die Speisung nimmt und damit die Lauthör-/Freisprech-Einrichtung (7) abschaltet.

10. Nebenstellenanlage nach einem der Ansprüche 1 bis 7, dadurch gekennzeichnet, daß die Zentralsteuereinheit (11) nach Eingabe einer sechsten Kodierung von dem angerufenen Fernsprechapparat (3) aus diesem die Speisung nimmt.

11. Nebenstellenanlage nach einem der vorstehenden Ansprüche, dadurch gekennzeichnet, daß ein Hörton das Einschalten der Lauthör-/Freisprech-Einrichtung (7) signalisiert.

12. Nebenstellenanlage nach Anspruch 11, dadurch gekennzeichnet, daß die Abgabe des Hörtons nach der Einschaltung der Lauthör-/Freisprech-Einrichtung (7) um einen vorgegebenen Zeitabschnitt verzögert erfolgt.

13. Nebenstellenanlage nach einem der vorstehenden Ansprüche, dadurch gekennzeichnet, daß ein optisches Anzeigemittel den eingeschalteten Zustand der Lauthör-/Freisprech-Einrichtung (7) anzeigt.

14. Nebenstellenanlage nach einem der Ansprüche 5 bis 13, dadurch gekennzeichnet, daß der programmierbare Fernsprechapparat (3) nach Eingabe der ersten Kodierung bis zur Eingabe der zweiten Kodierung direkte externe Anrufe nicht erhält.

15. Nebenstellenanlage nach Anspruch 14, dadurch gekennzeichnet, daß die zentrale Steuereinheit (11) den programmierbaren Fernsprechapparat (3) für externe Anrufe sperrt.

16. Nebenstellenanlage nach einem der vorstehenden Ansprüche, dadurch gekennzeichnet, daß die Verbindung zwischen der Zentraleinheit (1) und den einzelnen Fernsprechapparaten (2, 3, 4) als Zweidrahtleitungen (15) ausgebildet sind.
